# NEW EUROPEAN PATENT SPECIFICATION

(11) **EP 2 571 391 B2**
(45) Date of publication and mention of the opposition decision: **14.05.2025**
(45) Mention of the grant of the patent: 27.02.2019
(21) Application number: 11783162.8
(22) Date of filing: 12.05.2011
(51) Int. Cl.: H01F 7/02, A41F 1/00, A45C 13/10

(54) **FLEXIBLE MAGNETIC SEALING CLOSURE**
FLEXIBLER MAGNETISCHER DICHTUNGSVERSCHLUSS
FERMETURE ÉTANCHE MAGNÉTIQUE FLEXIBLE

(30) Priority: 16.11.2010 US 413996 P; 16.05.2010 US 345120 P
(43) Date of publication of application: 27.03.2013
(73) Proprietor: Gooper Hermetic Ltd., 40297 Michmoret (IL)
(72) Inventor: NAFTALI, Philip, 40297 Michmoret (IL); MOALEM, Izik, 45925 Moshav Adanim (IL)
(74) Representative: Maikowski & Ninnemann Patentanwälte Partnerschaft mbB
(86) International application number: PCT/IL2011/000381
(87) International publication number: WO 2011/145088

(56) References cited:
- EP-A1- 0 958 750
- EP-A1- 1 864 916
- WO-A1-2009/052458
- WO-A1-95/19754
- JP-A- H0 556 809
- JP-U- H0 474 010
- KR-Y1- 200 447 735
- TW-B- I 283 566
- US-A- 3 665 355
- US-A- 4 236 331
- US-A- 5 604 960
- US-A1- 2007 051 785
- US-A1- 2009 211 533
- US-A1- 2009 283 197
- US-A1- 2009 307 982
- US-B2- 6 434 801
- US-B2- 7 187 261

## Description

### FIELD OF THE INVENTION

The present invention generally relates to a sealing closure, and more specifically, to a sealing closure which is flexible and stable to mechanical deformations.

### BACKGROUND OF THE INVENTION

The present invention discloses a sealing closure which can be used in various applications (e.g., textile). Magnetic strips are well known in the art, but these strips cannot be used for sealing because their magnetic strength is very low. Therefore, there is a need to use strong magnetic elements (e.g., Neodymium), which are embedded with flexible strips.

US patent 7,187,261 (referred hereinafter to '261) discloses a magnetic strip that comprises a series of magnets, a flexible material strip locating and at least in part enclosing each surface of each magnet to define a longitudinal flexible arrangement capable of coupling to itself, a magnetisable material or to another magnet.

There are different problems with the flexible magnetic strip of patent '261. For example, this strip cannot be used to provide a sealing which is stable to various mechanical deformations (e.g., bending, twisting). One reason for this is the non-proximate distance between the magnetic elements of two strips which magnetically attract each other. Another reason for this is the mechanical characteristics of the materials from which the strips are made.

Therefore, it is a long felt need to provide a flexible sealing closure and/or sealable device which is made of at least one magnetic strips which is able to attract to another magnetic or ferromagnetic material, such that the magnetic attraction force of the magnets within the strip is not reduced.

EP 0 958 750 A1, US 6,434,801 B2 and US 5,604,960 disclose a magnetic sealing closure.

### SUMMARY OF THE INVENTION

According to the present invention there is provided a sealable device comprising a magnetic sealing closure according to present claim 1.

According to an embodiment each of the first and the second membranes is characterized by: (*i*) a predetermined thickness which substantially preserves the magnetic attraction capabilities of the plurality of magnetic elements of the first and second strips; and, (*ii*) a predetermined static friction coefficient which substantially prevents movement of the first membrane with respect to the second membrane; when provided, the sealing being stable to mechanical deformations of the sealing closure relative to the main axis of the first and second strips due to the predetermined thickness and the predetermined static friction coefficients of the first and second membranes.

According to an embodiment the predetermined thickness of each of the first and second membranes is between about 0.05 mm to about 0.6 mm.

According to an embodiment the predetermined thickness of each of the first and second membranes is about 0.2 mm.

According to an embodiment the predetermined static friction coefficient is between about 0.01 to about 0.99.

According to an embodiment the predetermined static friction coefficient is between about 0.1 to about 0.6.

According to an embodiment the predetermined static friction coefficient is about 0.5.

According to an embodiment the plurality of cavities are equally spaced between each other at a distance of between about 2 mm to about 8 mm, such that each magnetic element within each cavity of the plurality of cavities is characterized by: a diameter of between about 4 mm to about 10 mm; and, a thickness of between about 1 to about 3 mm.

According to an embodiment the first strip and the second strip are characterized by a width of between about 10 mm to about 20 mm, and a thickness of about 1 to about 3 mm.

According to an embodiment the first and second membranes and the first and second strips are made of polymeric materials selected from a group consisting of: elastomer, rubber, TPR, TPE, TPU, HPU, Neoprane, Polyacrylates, Polyamides, Polyesters, Polycarbonates, Polyimides, Polystyrenes, acrylonitrile butadiene styrene (ABS), polyacrylonitrile (PAN) or Acrylic, polybutadiene, poly (butylene terephthalate) (PBT), poly (ether sulfone) (PES, PES/PEES), poly(ether ether ketone)s (PEEK, PES/PEEK), polyethylene (PE), poly(ethylene glycol) (PEG), poly (ethylene terephthalate) (PET), polypropylene (PP), polytetrafluoroethylene (PTFE), styrene-acrylonitrile resin (SAN), poly(trimethylene terephthalate) (PTT), polyurethane (PU), polyvinyl butyral (PVB), polyvinylchloride (PVC), polyvinylidenedifluoride (PVDF), poly(vinyl pyrrolidone) (PVP), or any combination thereof.

According to an embodiment the magnetic elements are made of a material selected from the group consisting of: Neodymium, Neodymium Iron Boron (NdFeB), Samarium-Cobalt, Electromagnet, any other type of rare-earth magnet, and any combination thereof.

According to an embodiment the sealing closure is flexible and water impermeable.

The sealing closure is incorporated within the sealable device, such that when a sealing is provided by the sealing closure, the sealable device is sealed.

The first strip is mechanically connected to one portion of the sealable device via a first connecting means, and the second strip is mechanically connected to another portion of the sealable device via a second connecting means.

The one portion and the another portion of the strip are located at an opening of the sealable device.

The first and the second connecting means are selected from the group consisting of: RF welding, ultrasonic welding, heat welding or gluing.

According to an embodiment the sealable device is selected from the group consisting of: a pouch, a bag, a sack, a pocket, a device useful for sterile purposes, a door with a frame, a tent, a greenhouse, a waterproof pocket, or any combination thereof.

According to an embodiment the sealing closure is usable in fields selected from the group consisting of: packaging, storage, military, medical, agriculture, food, outdoor activities, textile, fashion, or any combination thereof.

According to an embodiment the sealing closure is a one way valve.

According to an embodiment the plurality of cavities of the first strip and the second strip are selected from the group consisting of: niches, recesses, pits, openings, holes, full openings, apertures, or any combination thereof.

According to an embodiment the sealing closure is manufactured according to a method selected from the group consisting of: extrusion, coextrusion, molding, or any combination thereof.

According to an embodiment the extrusion method is adapted to: (*i*) provide continuous first and second strip; and, *(ii)* form a plurality of cavities within the first and second strips.

According to an embodiment the molding method is adapted to provide the first strip and the second strip with the plurality of cavities according to a predetermined model.

According to an embodiment the sealing closure further comprises a coating adapted to be mechanically connected to at lease one of the first strip and the second strip from the second side of the same, when the plurality of cavities are full openings.

### BRIEF DESCRIPTION OF THE FIGURES

For a better understanding of the invention and to show how the same may be carried into effect, reference will now be made, purely by way of example, to the accompanying drawings in which like numerals designate corresponding elements or sections throughout.

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice. In the accompanying drawings:
FIGS. 1a-b are an illustration of specific embodiments of a sealing closure;
FIGS. 2a-b are illustrations of mechanical deformations which are applied on the sealing closure;
FIG. 3 is an illustration of one embodiment of the sealable device;
FIG. 4 is an illustration of another embodiment of the sealable device;
FIG. 5 is an illustration of another embodiment of the sealable device;
FIGS. 6 is an illustration of another embodiment of the sealable device;
FIG. 7 is an illustration of another embodiment of the magnetic strip; and
FIG. 8 is an illustration of different embodiments of the geometrical structure of the strip.

The drawings together with the description make apparent to those skilled in the art how the invention may be embodied in practice.

### DETAILED DESCRIPTION OF THE PREFERRED EMBODIMENTS

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

The term **'sealing'** refers hereinafter to a fastening procedure which provides a tight and/or hermetic closure, and/or to provide a closure which excludes passage of different materials (e.g., water, gas, air, etc.) through the sealing closure.

The term **'about'** refers hereinafter to an accuracy of a predetermined measure within a certainty of ±25%.

The term **'ferromagnetic material'** refers hereinafter to any material to which a magnetic material is able to be magnetically attracted. For example, the term 'ferromagnetic material' may refers to: iron, nickel, cobalt, some alloys of rare earth metals, and some naturally occurring minerals such as lodestone.

The term **'sealable device'** refers hereinafter to any device which is able to be sealed by the sealing closure of the present invention. For example, the sealable device may be: a pouch, a bag, a sack, a pocket, a device useful for sterile purposes, a waterproof money belt, a waterproof pocket, a door with a frame, a tent, a greenhouse, a waterproof pocket, or any combination thereof.

The term **'strip'** refers hereinafter to any substantially flexible object which may be characterized by any known in the art geometrical structure. According to the preferred embodiment, the geometrical structure is an elongated rectangular structure. According to other embodiments, the geometrical structure may be: square, oval, round, polygonal, etc.

The term **'full opening'** refers hereinafter to any opening within a strip which may be approached from at least two different sides of a strip.

The term **'magnetic elements'** refers hereinafter to any type of elements which may be made of a strong magnetic material such as: Neodymium (e.g., Neodymium Iron Boron (NdFeB)), Samarium-Cobalt or any other type of rare-earth magnet (or composition of materials). According to some embodiments, the 'magnetic element' may be an electromagnetic element which is well known in the art.

The present invention discloses a sealable device comprising a novel magnetic sealing closure 100 usable in various fields, as will be presented below.

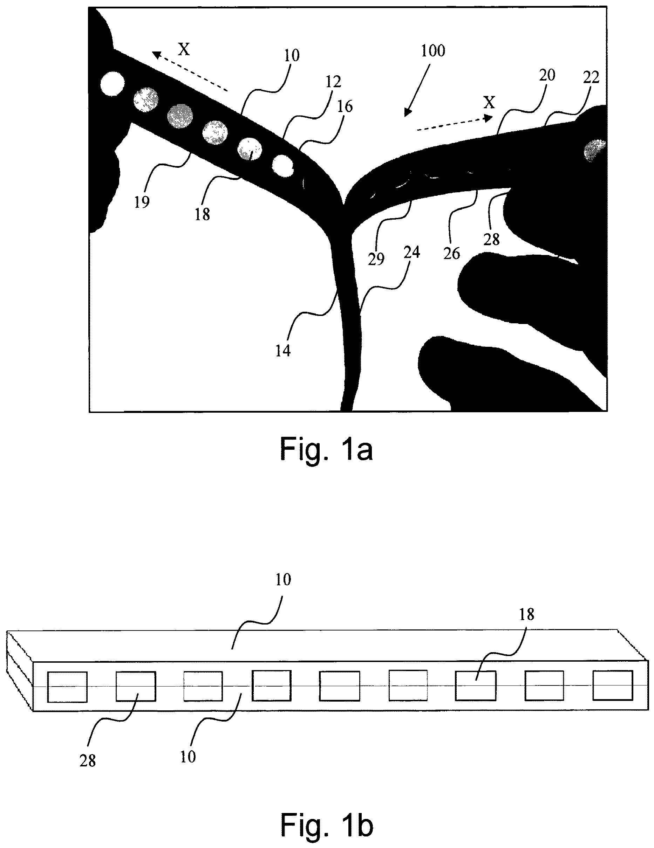

According to Fig. 1a, which schematically illustrates a specific embodiment of sealing closure 100, the sealing closure 100 comprises the following:
a. A first flexible strip 10, having a main axis X, a first side 12 and a second side 14, with a plurality of cavities 16 which are adapted to incorporate a plurality of magnetic elements 18.
b. A second flexible strip 20, having a main axis X, a first side 22 and a second side 24, with a plurality of cavities 26 which are adapted to incorporate a plurality of magnetic elements 28.

The main novel element according to which a mechanically stable sealing can be provided via sealing closure 100, is a first membrane 19 which is connectable to first side 12 of first strip 10, and a second membrane 29 which is connectable to first side 22 of second strip 20.

One of the main purposes of first membrane 19 is to encapsulate and embed magnetic elements 18 of first strip 10 within plurality of cavities 16, between first strip 10 and first membrane 19. One of the main purposes of second membrane 29 is to encapsulate and embed magnetic elements 28 of second strip 20 within plurality of cavities 26, between second strip 20 and second membrane 29.

According to different embodiments of the present invention, the magnetic sealing closure of the present invention may be used as a combination of two or more magnetic strips 10 and 20, which may be magnetically attracted and thus connectable to each other and also to other magnetic or ferromagnetic elements.

As illustrated in Fig.1a, first strip 10 and second strip 20 are brought together from the side of first membrane 19 and second membrane 29, such that they are in contact with each other, and such that magnetic elements 18 and 28 magnetically attract each other. This magnetic attraction is adapted to provide a sealing.

As will be discloses below, the special construction of each one of the strips 10 and 20 with magnetic elements and membranes, is adapted to provide a sealing which is stable to mechanical deformations. A stable sealing is a sealing in which strip 10 and strip 20 are not disconnected from each other when mechanical deformations of sealing closure 100 occur.

The inventors of the present invention have discovered that is order to provide a stable sealing, membranes 19 and 29 have to be thin enough, so that magnetic elements 18 and 28 will be close enough to each other when they attract each other.

One of the main characteristics of the present invention, according to which the stability of the sealing is available, is the relatively thin thickness of first membrane 19 and second membrane 29. First membrane 19 and second membrane 29 are characterized by a predetermined thickness which substantially preserves the magnetic attraction capabilities of plurality of magnetic elements 18 and 28 of first and second strips 10 and 20.

According to some embodiment of the present invention, the predetermined thickness of each of first and second membranes 19 and 29 is between about 0.05 mm to about 0.6 mm. Preferably, this thickness is between about 0.2 mm to about 0.4 mm.

The inventors of the present invention have additionally discovered that is order to provide a stable sealing, membranes 19 and 29 have to be characterized by a predetermined static friction coefficient. The predetermined static friction coefficient of membranes 19 and 29 is adapted to prevent relative movement of membranes 19 and 29 with respect to each other, when mechanical deformations of sealing closure 100 occur.

According to some embodiments of the present invention, the predetermined static friction coefficient is between about 0.01 to about 0.99. According to other embodiments of the present invention, the predetermined static friction coefficient is between about 0.1 to about 0.6. Preferable, the predetermined static friction coefficient is about 0.5.

The sealing which is provided by sealing closure 100 is adapted to be stable to various mechanical deformations relative to main axis X of first and second strips 10 and 20 when they are brought together. For example, these mechanical deformations may be: bending, rotation, twisting, tilting, or any combination thereof. The bending may be to a full circle, and the twisting may be in more than 360°. This stability is provided both by said predetermined thickness of membranes 19 and 29, and their predetermined friction coefficient.

It is important to emphasize that in order to provide stability of the sealing, according to some embodiment of the present invention, only one of the two main characteristics (the thickness and the friction coefficient) of the membranes is required.

In Fig.1b, a side view of the present invention is illustrated.

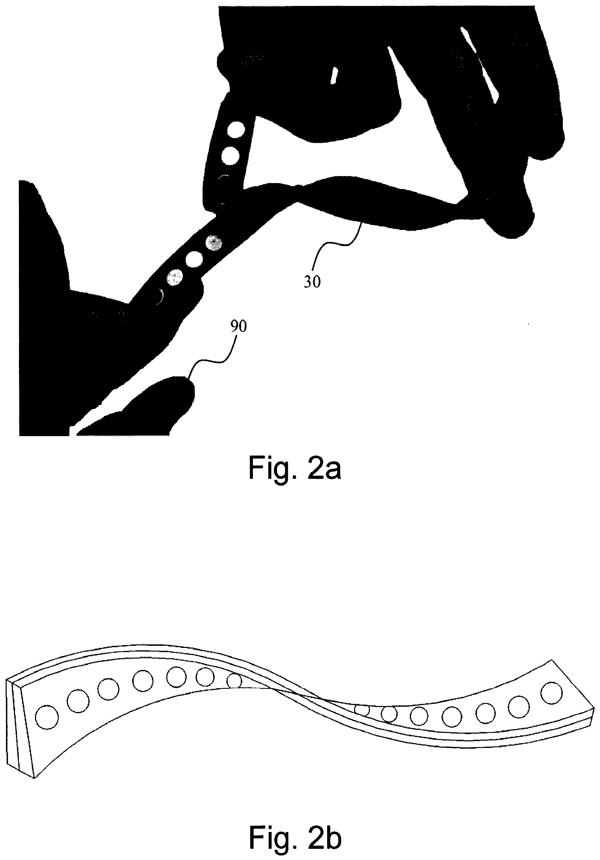

Reference is now made to Figs.2a-b which schematically illustrate the advantages of the present invention over the prior art, and more specifically, this figure illustrates that the stability of the sealing, when mechanical deformations occur.

According to this figure, a twist of the sealing closure relative to main axis X is performed by a user 90. In this figure is can clearly seen that the first and the second strips 10 and 20 are not separated in the area of the twist 30.

According to Fig. 1a, plurality of cavities 16 and 26 are equally spaced between each other at a distance of about 3 mm. According to other embodiments, this distance is between about 2 mm to about 8 mm. According to the embodiment in Fig. 1a, magnetic elements 18 and 28 are characterized by: a diameter of about 6 mm, and a thickness of about 2 mm. According to other embodiments, the diameter is about between about 4 mm to about 10 mm, and the thickness is between about 1 to about 3 mm.

According to Fig. 1a, first strip 10 and second strip 20 are characterized by a width of between about 10 mm to about 20 mm, and a thickness of about 1 to about 3 mm.

According to some embodiment, first and second membranes 19 and 29 and first and second strips 10 and 20 are made of polymeric materials selected from a group consisting of: elastomer, rubber, TPR, TPE, TPU, HPU, Neoprane, Polyacrylates, Polyamides, Polyesters, Polycarbonates, Polyimides, Polystyrenes, acrylonitrile butadiene styrene (ABS), polyacrylonitrile (PAN) or Acrylic, polybutadiene, poly (butylene terephthalate) (PBT), poly (ether sulfone) (PES, PES/PEES), poly(ether ether ketone)s (PEEK, PES/PEEK), polyethylene (PE), poly(ethylene glycol) (PEG), poly (ethylene terephthalate) (PET), polypropylene (PP), polytetrafluoroethylene (PTFE), styrene-acrylonitrile resin (SAN), poly(trimethylene terephthalate) (PTT), polyurethane (PU), polyvinyl butyral (PVB), polyvinylchloride (PVC), polyvinylidenedifluoride (PVDF), poly(vinyl pyrrolidone) (PVP), or any combination thereof. It is also appreciated that any convenient material known in the art may be used for the aforementioned membranes.

According to the preferred embodiments of the present invention, first and second membranes 19 are made of PVC.

According to some embodiment, magnetic elements 18 and 28 are made of a material selected from the group consisting of: Neodymium, Neodymium Iron Boron (NdFeB), Samarium-Cobalt, Electromagnet, any other type of rare-earth magnet, and any combination thereof.

It is further appreciated that, in some embodiments of the present invention, a first or second strip may be provided with at least some elements made of ferromagnetic material.

According to some embodiment, said sealing closure is flexible and water impermeable. According to other embodiment, said sealing closure is impermeable to other known materials (e.g., air, gas, dust, chemical, biological, etc.)

According to the embodiment of Fig.1a, the plurality of cavities 16 and 26 are non-full holes, full openings, but only partial cavities. According to other embodiments, the plurality of cavities 16 and 26 may be: niches, recesses, pits, openings, holes, full openings, apertures, or any combination thereof.

According to other embodiments, in which the plurality of cavities are full openings (e.g., holes), first and second strips are coated with a coating which is mechanically connectable to the second side of at lease one of the first and the second strips.

According to different embodiment of the present invention, the sealing closure is usable in fields selected from the group consisting of: packaging, storage, military, medical, agriculture, food, outdoor activities, textile, fashion, or any combination thereof.

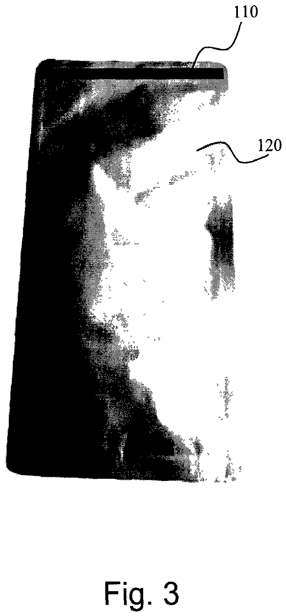

Reference is now made to Figs. 3-4 which schematically illustrate two magnetic strips being incorporated in a sealable device 120. According to the embodiments of Figs. 3-4, the membrane which is connectable to each one of the flexible strips is part of the sealable device. According to other embodiments, the membrane which is connectable to each one of the flexible strips is not part of the sealable device. According to these embodiments, the membrane is connectable via any conventional means to the walls of the sealable device.

According to the embodiment in which the membrane is part of the sealable device, the sealable device 120 may comprise the following elements:
a. a first flexible strip 110, having a main axis, a first side 111 and a second side 112, with a plurality of cavities adapted to incorporate a plurality of magnetic elements;
b. a second flexible strip 115, having a main axis, a first side 116 and a second side 117, with a plurality of cavities adapted to incorporate a plurality of magnetic elements;
c. a first wall 125 connectable to first side 111 of first strip 110, such that the plurality of magnetic elements of first strip 110 are embedded within the plurality of cavities between first strip 110 and first wall 125;
d. a second wall 127 connectable to first side 116 of second strip 115, such that the plurality of magnetic elements of second strip 115 are embedded within the plurality of cavities between second strip 115 and second wall 127.

As indicated by arrow 119, first and second strips 110 and 115 are adapted to be brought together from the side of the first and second walls 125 and 127, such that the magnetic elements and of first and the second strips 110 and 115 magnetically attract each other and a sealing is provided. According to the embodiment of Figs. 3-4, each of the first and the second walls 125 and 127 may be characterized by: (*i*) a predetermined thickness which substantially preserves the magnetic attraction capabilities of the plurality of magnetic elements and of first and second strips 110 and 115; and, (*ii*) a predetermined static friction coefficient which substantially prevents movement of first wall 125 with respect to second wall 127. When provided, the sealing may be stable to mechanical deformations of sealing device 120 relative to the main axis of first and second strips 110 and 115 due to the predetermined thickness and the predetermined static friction coefficients of first and second walls 125 and 127.

According to some embodiments, the predetermined thickness of each of first and second walls 125 and 127 is between about 0.05 mm to about 0.6 mm. According to other embodiments, the predetermined thickness of each of first and second walls 125 and 127 is about 0.2 mm. According to some embodiments, the predetermined static friction coefficient is between about 0.01 to about 0.99. According to other embodiments, the predetermined static friction coefficient is between about 0.1 to about 0.6. According to other embodiments, the predetermined static friction coefficient is about 0.5.

According to some embodiments, the plurality of cavities are equally spaced between each other at a distance of between about 2 mm to about 8 mm, such that each magnetic element within each cavity of the plurality of cavities is characterized by: a diameter of between about 4 mm to about 10 mm; and, a thickness of between about 1 to about 3 mm. According to other embodiments, first strip 110 and second strip 115 are characterized by a width of between about 10 mm to about 20 mm, and a thickness of about 1 to about 3 mm.

According to other embodiments, first and second walls 125 and 127 and first and second strips 110 and 115 are made of polymeric materials selected from a group consisting of: elastomer, rubber, TPR, TPE, TPU, HPU, Neoprane, Polyacrylates, Polyamides, Polyesters, Polycarbonates, Polyimides, Polystyrenes, acrylonitrile butadiene styrene (ABS), polyacrylonitrile (PAN) or Acrylic, polybutadiene, poly (butylene terephthalate) (PBT), poly (ether sulfone) (PES, PES/PEES), poly(ether ether ketone)s (PEEK, PES/PEEK), polyethylene (PE), poly(ethylene glycol) (PEG), poly (ethylene terephthalate) (PET), polypropylene (PP), polytetrafluoroethylene (PTFE), styrene-acrylonitrile resin (SAN), poly(trimethylene terephthalate) (PTT), polyurethane (PU), polyvinyl butyral (PVB), polyvinylchloride (PVC), polyvinylidenedifluoride (PVDF), poly(vinyl pyrrolidone) (PVP), or any combination thereof.

According to different embodiments the magnetic elements are made of a material selected from the group consisting of: Neodymium, Neodymium Iron Boron (NdFeB), Samarium-Cobalt, Electromagnet, any other type of rare-earth magnet, and any combination thereof.

According to different embodiments, the mechanical deformations to which sealable device 120 is stable are selected from the group consisting of: bending, rotation, twisting, tilting, or any combination thereof.

According to different embodiments, when a sealing is provided by the magnetic strips of the present invention, sealable device 120 may be flexible and water impermeable.

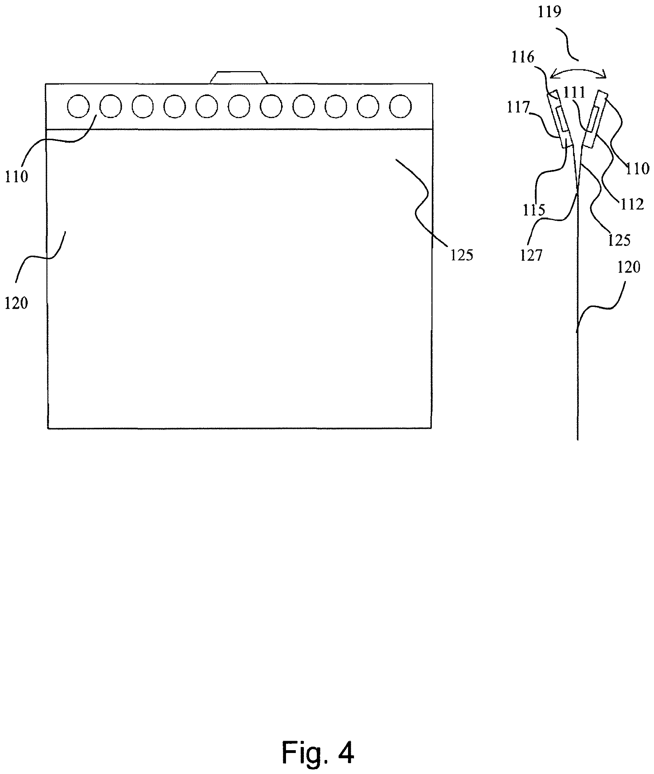

According to the embodiments of Figs. 3 and 4, first strip 110 and second strip 120 are locateable at an opening of sealable device 120.

According to different embodiments, first and second strips 110 and 115 are connectable to first and second walls 125 and 127 via a connecting means selected from the group consisting of: RF welding, ultrasonic welding, heat welding or gluing.

According to different embodiments, sealable device 120 may be selected from the group consisting of: a pouch, a bag, a sack, a pocket, a device useful for sterile purposes, a door with a frame, a tent, a greenhouse, a waterproof pocket, or any combination thereof.

According to different embodiments, sealable device 120 may be usable in fields selected from the group consisting of: packaging, storage, military, medical, agriculture, food, outdoor activities, textile, fashion, or any combination thereof.

According to different embodiments, sealable device 120 may be used as a one way valve.

According to some embodiments, the plurality of cavities of first strip 110 and second strip 115 may be selected from the group consisting of: niches, recesses, pits, openings, holes, full openings, apertures, or any combination thereof. According to these embodiments, the a membrane may be connected to second sides 112 and/or 117 of first strip 110 and/or second strip 115.

According to different embodiments, sealing closure 120 may be manufactured according to a method selected from the group consisting of: extrusion, coextrusion, molding, or any combination thereof. The extrusion method may be used to: (i) provide continuous first and second strip; and, *(ii)* form a plurality of cavities within the first and second strips. The molding method may be used to provide the first strip and the second strip with the plurality of cavities according to a predetermined model.

According to different embodiments sealable device 120 may comprise an additional membrane which is adapted to be mechanically connected to at lease one of first strip 110 and second strip 115 from the second side 112 and/or 117 of the same, when the plurality of cavities are full openings.

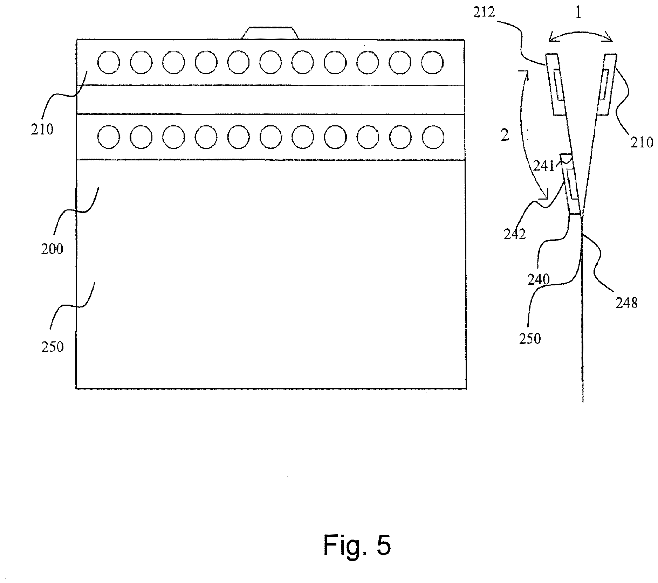

Reference is now made to Fig. 5 in which another embodiment is illustrated. According to this embodiment, an additional third magnetic element (e.g., magnetic strip 240) may be added to the sealable device.

According to Fig. 5, third magnetic element is a third flexible strip 240, having a main axis, a first side 241 and a second side 242, with a plurality of cavities adapted to incorporate a plurality of magnetic elements. Third strip 240 is connectable to one of the second wall 250 (or to first wall 248), such that the plurality of magnetic elements of third strip 240 are embedded within the plurality of cavities between third strip 240 and one of second wall 250.

As illustrated in Fig. 5, the sealing which is provided by first and the second strips 210 and 212 is adapted to be bent towards the direction of third strip 240. The sealing of first and the second strips 210 and 212 is adapted to magnetically attract to second side 242 of third strip 240, so as to improve the sealing. The improvement of the sealing may be provided by at least two of the following effects: (i) the folding of sealable device provides an improvement the closure of the sealable device; (ii) the magnetic attraction of the magnetic elements of third strip 240 improves the magnetic attraction between the magnetic elements of the first and the second strips 210 and 212.

According to other embodiments the sealable device may comprise four or more magnetic strips with magnetic elements incorporated therein.

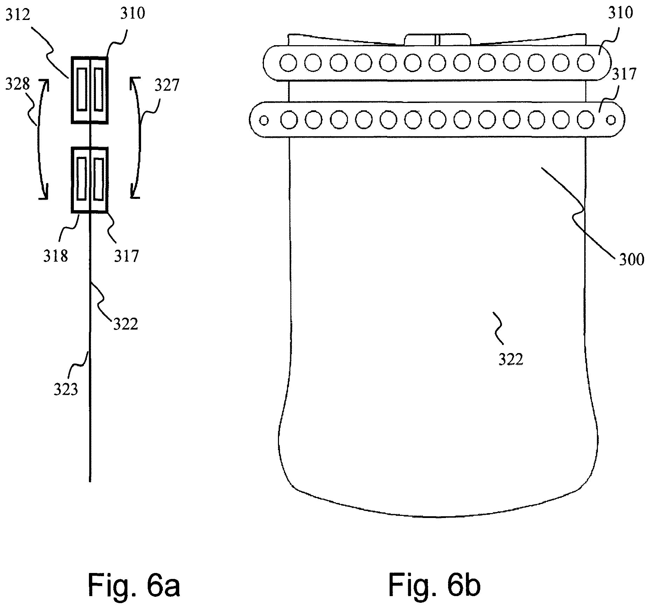

Figs. 6a-b schematically illustrate an embodiment in which two pair of magnetic strips are illustrated. According to these figures, additionally two the first and the second strips 310 and 312, sealable device 300 further comprises the following elements:
a. a third flexible strip 317, having a main axis, a first side and a second side, with a plurality of cavities adapted to incorporate a plurality of magnetic elements. Third strip 317 is connectable to first wall 322, such that the plurality of magnetic elements of third strip 317 are embedded within the plurality of cavities between third strip 317 and first wall 322;
b. a fourth flexible strip 318, having a main axis, a first side and a second side, with a plurality of cavities adapted to incorporate a plurality of magnetic elements, the fourth strip 318 is connectable to second wall 323, such that the plurality of magnetic elements of fourth strip 318 are embedded within the plurality of cavities between fourth strip 318 and second wall 323.

As illustrated in Figs. 6a-b, third and fourth strips 317 and 318 and are adapted to be brought together from the side of first and second walls 322 and 323, such that the magnetic elements of the third and the fourth strips magnetically attract each other and a sealing is provided.

According to Figs. 6a-b. third strip 317 is parallel to first strip 310, and second strip 318 is parallel to fourth strip 312.

As indicated by arrows 327 and 328, the sealing of first and second strips 310 and 312 is adapted to be bent towards the direction of one of the: the second side of third strip 317 or the second of fourth strip 318. The sealing of first and second strips 310 and 312 is adapted to magnetically attract to one of the: the second side of third strip 317 or the second the of fourth strip 318, so as to improve the sealing. The improvement of the sealing may be provided by at least two of the following effects:
(i) the folding of sealable device provides an improvement the closure of the sealable device;
(ii) the magnetic attraction of the magnetic elements of third strip 317 and/or fourth strip 318 improves the magnetic attraction between the magnetic elements of the first and the second strips 310 and 312;
(iii) the existence of two pair of magnetic strips, each of which provides a sealing closure, improves the overall sealing effect provided to sealable device 300.

According to the embodiments of Figs. 3-6, the sealable device of the present invention is a pouch.

The sealing closure is incorporated within a sealable device which according to the embodiment is a pouch. The sealing closure is adapted to provide sealing to the internal cavity of sealable device. When sealing is provided by the sealing closure, sealable device is sealed.

For example, the first strip may be mechanically connected to one portion (e.g., internal wall) of a sealable device via a first connecting means, and second strip may be mechanically connectable to another portion (e.g., the other internal wall) of a sealable device via a second connecting means.

According to different embodiments of the present invention, the first and the second connecting means are selected from the group consisting of: RF welding, ultrasonic welding, heat welding, sewing, via a seal tape, gluing, or any combination thereof.

The ability of the present invention to provide stability of the sealing is highly important in various cases. For example, when the sealing closure is used as a pocket is a swimming suit, the sealing has to be preserved when the user is wearing the swimming suit, and the sealing closure is bent.

As illustrated in Fig.4, the sealing closure provided by first and second strips 110 and 115, is incorporated within sealable device 120. According to this embodiment, the first membrane and/or the second membrane are the walls 125 and 127 of sealable device 120.

According to some embodiments, the sealing closure which is illustrated in Fig.3 and Fig.4, is a one way valve. As a one way valve, the sealing is opened by an actuated pressure within the sealing closure, and following that, the material (e.g., air) which is trapped within the valve goes out, and the sealing is closed again. For example, the one valve may be used in order to release an air which is trapped within the sealable device, while preventing water from entering within the device.

According to another embodiment of the present invention, the sealing closure may comprises a third strip with magnetic elements which are covered by a membrane (at one of the sides of the third strip). According to some embodiments, this strip with the magnetic elements and the membrane may be similar to one of the component of the sealable device. According to this embodiment, the magnets of the third strip are attracted to the magnets of the second stripand/ or the first strip, and thereby improving the magnetic attraction between the magnets of the first and the second strips. Moreover, due to the folding of the first and the second strips when brought together, towards the third magnetic strip, the closure is improved, and the internal pressure on the sealing closure is reduces. The third magnetic strip with the magnetic elements and the membrane are be used to provide sustainability to high internal pressure (or other) forces within the sealable device, when the sealable device is folded.

According to different embodiment of the present invention, the sealing closure may be manufactured via the following methods of manufacturing: extrusion, coextrusion, molding, pre-cut polymer sheeting, laminating, etc.

According to other embodiments, a single magnetic strip 10 may be used for various purposes which are known in the art (e.g., connection of various objects to each other, fastening purposes, etc.). For example, the single magnetic strip 10 (with the plurality of magnetic 18 encapsulated by a first membrane 19) may be used for: dry store of objects, storage of materials, tents, sealable structures and/or rooms, greenhouses, covering and/or isolation for long periods of time, medical purposes.

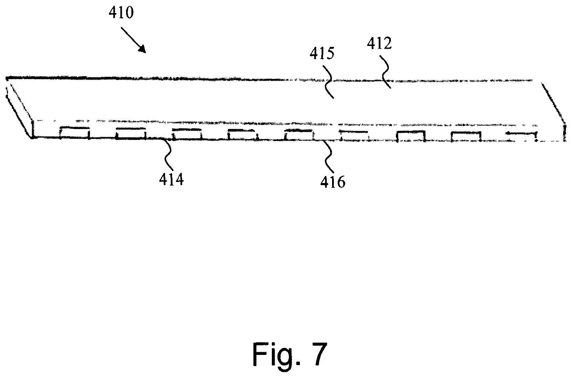

Reference is now made to Fig. 7, which schematically illustrates a single magnetic strip 410 which comprises a first flexible strip 412, having a main axis, a first side 414 and a second side 415, with a plurality of cavities adapted to incorporate a plurality of magnetic elements. The magnetic strip 410 further comprises a first membrane 416 connectable to first side 414 of first strip 412, such that the plurality of magnetic elements of first strip 412 are embedded within the plurality of cavities between first strip 412 and first membrane 416.

According to different embodiments, magnetic strip 410 is adapted to attract to a ferromagnetic material or a magnetic material from the side of first membrane 416.

According to different embodiments, magnetic strip 410 is adapted to magnetically attract to a curved surface while preserving the connection of the same along the length of the same. According to different embodiments, first membrane 416 and is characterized by: (*i*) a predetermined thickness which substantially preserves the magnetic attraction capabilities of the plurality of magnetic elements of the first strip; and, (*ii*) a predetermined static friction coefficient which substantially prevents movement of the first membrane with respect to a material to which the magnetic elements are attracted.

According to different embodiments, the predetermined thickness of first membrane 416 is between about 0.05 mm to about 0.6 mm. According to other embodiments, the predetermined thickness of first membrane 416 is about 0.2 mm. According to different embodiments, the predetermined static friction coefficient is between about 0.01 to about 0.99. According to other embodiments, the predetermined static friction coefficient is between about 0.1 to about 0.6. According to other embodiments, the predetermined static friction coefficient is about 0.5.

According to some embodiments, the plurality of cavities are equally spaced between each other at a distance of between about 2 mm to about 8 mm, such that each magnetic element within each cavity of the plurality of cavities is characterized by: a diameter of between about 4 mm to about 10 mm; and, a thickness of between about 1 to about 3 mm.

According to some embodiments, first strip 412 is characterized by a width of between about 10 mm to about 20 mm, and a thickness of about 1 to about 3 mm.

According to some embodiments, first membrane 416 and first strip 412 may be made of polymeric materials selected from a group consisting of: elastomer, rubber, TPR, TPE, TPU, HPU, Neoprane, Polyacrylates, Polyamides, Polyesters, Polycarbonates, Polyimides, Polystyrenes, acrylonitrile butadiene styrene (ABS), polyacrylonitrile (PAN) or Acrylic, polybutadiene, poly (butylene terephthalate) (PBT), poly (ether sulfone) (PES, PES/PEES), poly(ether ether ketone)s (PEEK, PES/PEEK), polyethylene (PE), poly(ethylene glycol) (PEG), poly (ethylene terephthalate) (PET), polypropylene (PP), polytetrafluoroethylene (PTFE), styrene-acrylonitrile resin (SAN), poly(trimethylene terephthalate) (PTT), polyurethane (PU), polyvinyl butyral (PVB), polyvinylchloride (PVC), polyvinylidenedifluoride (PVDF), poly(vinyl pyrrolidone) (PVP), or any combination thereof.

According to some embodiments, the magnetic elements may be made of a material selected from the group consisting of: Neodymium, Neodymium Iron Boron (NdFeB), Samarium-Cobalt, Electromagnet, any other type of rare-earth magnet, and any combination thereof.

According to some embodiments, magnetic strip 410 may be stable to mechanical deformations selected from the group consisting of: bending, rotation, twisting, tilting, or any combination thereof.

According to some embodiments, magnetic strip 410 may be flexible and water impermeable.

Magnetic strip 410 is used within a sealable device, such that when magnetic strip 410 is attracted to another ferromagnetic or magnetic element, the sealable device is sealed.

First strip 412 is mechanically connected to one portion of the sealable device via a first connecting means. The one portion is located at an opening of the sealable device, and the first connecting means may be selected from the group consisting of: RF welding, ultrasonic welding, heat welding or gluing.

The one portion is the first membrane.

According to some embodiments, the sealable device is selected from the group consisting of: a pouch, a bag, a sack, a pocket, a device useful for sterile purposes, a door with a frame, a tent, a greenhouse, a waterproof pocket, or any combination thereof.

According to some embodiments, the sealing closure which may be provided by magnetic strip 410 is usable in fields selected from the group consisting of: packaging, storage, military, medical, agriculture, food, outdoor activities, textile, fashion, or any combination thereof.

According to some embodiments, the sealing closure which may be provided by magnetic strip 410 is a one way valve.

According to some embodiments, the plurality of cavities of first strip 412 may be selected from the group consisting of: niches, recesses, pits, openings, holes, full openings, apertures, or any combination thereof.

According to some embodiments, magnetic strip 410 may additionally comprise a second membrane connectable to the second side of first strip 412, such that the plurality of magnetic elements of the first strip are embedded within the plurality of cavities between the first strip and the second membrane.

According to some embodiments, the sealing closure is manufactured according to a method selected from the group consisting of: extrusion, coextrusion, molding, or any combination thereof. According to some embodiments, the extrusion method is adapted to: (*i*) provide continuous first strip; and, (*ii*) form a plurality of cavities within the first strip.

According to some embodiments, the molding method is adapted to provide the first strip with the plurality of cavities according to a predetermined model.

According to some embodiments, the magnetic strip further comprises a coating adapted to be mechanically connected to the first strip from the second side of the same, when the plurality of cavities are full openings.

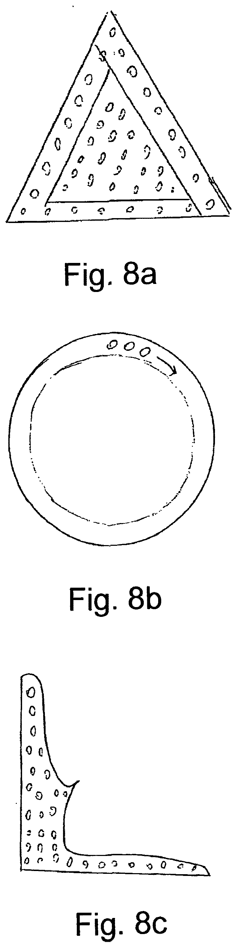

Reference is now made to Figs. 8a-c, which schematically illustrates the different embodiments according to which the strip may be manufactured. According to these embodiments, the strip may be characterized by any known in the art geometrical structure, shape or dimensions (ID, 2D, or 3D) such as: rectangular, oval, or any other known the art geometrical structure. As can be seen in these figures, the arrangement of the magnetic elements with the magnetic strip may be provided according to different patters (according to the different needs).

The sealing closure of the present invention can be manufactured according to the following steps:
a. Providing (*i*) a first flexible strip, having a main axis, a first side and a second side, with a plurality of cavities adapted to incorporate a plurality of magnetic elements; and, (*ii*) a second flexible strip, having a main axis, a first side and a second side, with a plurality of cavities adapted to incorporate a plurality of magnetic elements.
b. Inserting the plurality of magnetic elements within the plurality of cavities of the first and the second strips.
c. Connecting a first membrane to the first side of the first strip, thereby embedding the plurality of magnetic elements of the first strip within the plurality of cavities between the first strip and the first membrane.
d. Connecting a second membrane to the first side of the second strip, thereby embedding the plurality of magnetic elements of the second strip within the plurality of cavities between the second strip and the second membrane. Each one of the first and the second membranes is characterized by: (*i*) a predetermined thickness which substantially preserves the magnetic attraction capabilities of the plurality of magnetic elements of the first and the second strips; and, *(ii)* a predetermined static friction coefficient;
e. Bringing together the first strip and the second strip from the side of the first and second membranes, and magnetically attracting the magnetic elements of the first strip and the second strip to each other, thereby providing a sealing.

According to different embodiment of the present invention, the first and the second strips of the present invention may be manufactured via an extrusion or a molding method.

If the sealing closure is manufactured in the extrusion method, the method comprises additional steps of: (*i*) producing a continuous first and second strips; and, (*ii*) forming the plurality of cavities within the first strip and the second strip. According to some embodiments, in the extrusion process, which may be fully automated, cavities are formed within the strips, and magnets are inserted within the strips only after that. The process of forming the cavities may be performed by a punching machine which creates openings (two-sided openings), or by a pressure machine.

If the sealing closure is manufactured in the molding method, the method comprises an additional step of: producing a strip with the plurality of cavities according to a predetermine model.

The method of manufacturing a sealing closure further comprises a step of providing the first membrane and the second membrane with the predetermined thickness of between about 0.05 mm to about 0.6 mm.

Reference is now made to a method of manufacturing a sealable device, said device comprising a magnetic sealing closure having
a. a first flexible strip, having a main axis, a first side and a second side, with a plurality of cavities adapted to incorporate a plurality of magnetic elements;
b. a second flexible strip, having a main axis, a first side and a second side, with a plurality of cavities adapted to incorporate a plurality of magnetic elements;
c. a first wall connectable to said first side of said first strip, such that said plurality of magnetic elements of said first strip are embedded within said plurality of cavities between said first strip and said first wall;
d. a second wall connectable to said first side of said second strip, such that said plurality of magnetic elements of said second strip are embedded within said plurality of cavities between said second strip and said second wall;
wherein said first and second strips and are adapted to be brought together from the side of said first and second walls, such that said magnetic elements of said first and said second strips magnetically attract each other and a sealing is provided,

The aforementioned method comprising steps of injecting in a single mould the body of the sealable device and the magnetic sealing closure and incorporating within said body said magnetic sealing closure during the mould casting process.

According to different embodiments of the present invention, the sealing closure is characterized by a characteristic selected from: gas proof, waterproof, designed for biological warfare, extremely flexible and splash proof.

According to different embodiments of the present invention, the sealing closure may be characterized by a predetermined length (e.g., 30 cm- 50 meter), or a continuous length.

The present invention can also be used for: pockets in a swim wear for men or women, detached water resistant pouches for use in the water, waterproof pockets in military uniforms, waterproof pockets in outdoor recreation clothing, closing for tents/green houses, closing for long/short term, Temperature controlled, conditions (Dry storage), Temp/long term covers for vehicles or outdoors, medical use for keeping sterile tools air and gas tight, reusable seal for transporting sensitive goods, biochemical warfare protection gear, food industry as a reusable seal (like dog food bags), boating and water sports, detached or connected pouches, bags of all descriptions.

An additional advantage of the present invention is the easy opening of the sealing. In other words, the amount of power needed in order to open the sealing is relatively low. According to an experimental data, the power which is needed in order to separate two magnets is between about 0.5 Kg. to 1.1 Kg.

According to another experimental data which was obtained from experiment on the shear forces between the first and the second membranes of the sealing closure, the results are the following:

| No. of magnets | Shear forces (N) |
|---|---|
| 1 | 1.47 |
| 2 | 3.78 |
| 3 | 5.44 |
| 4 | 8.10 |
| 5 | 10.19 |
| 6 | 12.28 |
| 7 | 14.15 |
| 8 | 17.01 |
| 9 | 19.40 |
| 10 | 21.93 |
| 11 | 23.19 |
| 12 | 24.51 |
| 13 | 26.18 |
| 14 | 30.82 |
| 15 | 31.21 |

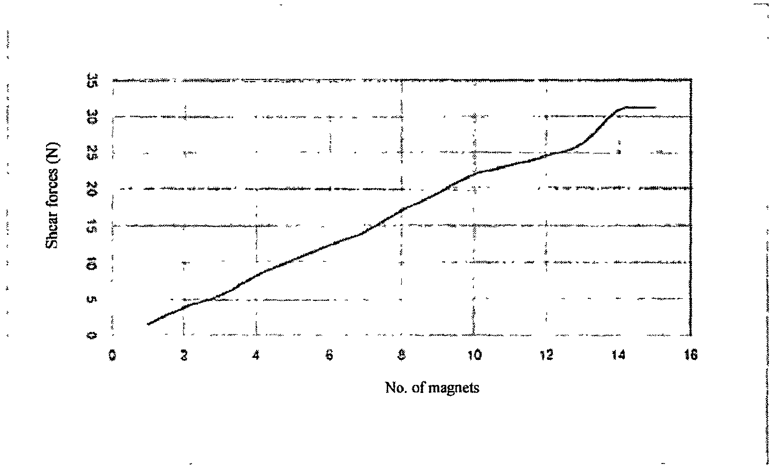

## Claims

1. A sealable device (120), comprising a magnetic sealing closure (100) comprising:
two flexible strips (10, 20); each strip (10,20) having a main axis (X) and comprising a plurality of magnetic elements (18, 28) of the closure;
said strips (10, 20) each carrying a membrane (19, 29) of the closure connected to a side of the respective strip and facing each other with the membranes when brought into contact therebetween by means of an attracting force generated by said magnetic elements (18, 28), such that a sealing of the sealing closure (100) is provided and, when a sealing is provided by said sealing closure (100), the sealable device (120) is sealed;
wherein said strips (10, 20) each have a thickness thereof;
wherein said strips (10, 20) each have a plurality of cavities (16, 26) therewithin within said thickness;
for each of said strips said cavities (16, 26) thereof encapsulate and embed said magnetic elements (18, 28) thereof within said thickness thereof, between the strip and the respective membrane carried thereon;
wherein the sealable device (120) comprises a first portion and a second portion located at an opening of the sealable device (120), wherein a first of the membranes (19, 29) is the first portion and a second of the membranes (19, 29) is the second portion, wherein the first portion is connected to a first of the strips via a first connecting means selected from the group of RF welding, ultrasonic welding, heat welding or gluing, and the second portion is connected to a second of the strips (10, 20) via a second connecting means selected from the group of RF welding, ultrasonic welding, heat welding or gluing.

2. The sealable device (120) of claim 1, wherein each of said membranes (19, 29) is **characterized by** : (i) a predetermined thickness which substantially preserves the magnetic attraction capabilities of said plurality of magnetic elements (18, 28) of said strips (10, 20); and, (ii) a predetermined static friction coefficient which substantially prevents movement of said membranes (19, 29) with respect to each other; when provided, said sealing being stable to mechanical deformations of said sealing closure (100) relative to said main axis (X) of said strips (10, 20) due to said predetermined thickness and said predetermined static friction coefficients of said membranes (19, 29).

3. The sealable device (120) of claim 1, wherein said membranes (19, 29) and said strips (10, 20) are made of polymeric materials selected from a group consisting of: elastomer, rubber, TPR, TPE, TPU, HPU, Neoprane, Polyacrylates, Polyamides, Polyesters, Polycarbonates, Polyimides, Polystyrenes, acrylonitrile butadiene styrene (ABS), polyacrylonitrile (PAN) or Acrylic, polybutadiene, poly (butylene terephthalate) (PBT), poly (ether sulfone) (PES, PES/PEES), poly(ether ether ketone)s (PEEK, PES/PEEK), polyethylene (PE), poly(ethylene glycol) (PEG), poly (ethylene terephthalate) (PET), polypropylene (PP), polytetrafluoroethylene (PTFE), styrene-acrylonitrile resin (SAN), poly(trimethylene terephthalate) (PTT), polyurethane (PU), polyvinyl butyral (PVB), polyvinylchloride (PVC), polyvinylidenedifluoride (PVDF), poly(vinyl pyrrolidone) (PVP), or any combination thereof.

4. The sealable device (120) of claim 1, wherein said sealing closure is flexible and water impermeable.

5. The sealable device (120) of claim 1, wherein said plurality of cavities (16, 26) of said strips (10, 20) are selected from the group consisting of: niches, recesses, pits, openings, holes, full openings, apertures, or any combination thereof.

## Patentansprüche

1. Abdichtbare Vorrichtung (120) mit einem magnetisch abdichtenden Verschluss (100), der Folgendes umfasst:
zwei flexible Streifen (10, 20); wobei jeder Streifen (10, 20) eine Hauptachse (X) aufweist und mehrere magnetischen Elemente (18, 28) des Verschlusses umfasst;
wobei die Streifen (10, 20) jeweils eine Membran (19, 29) des Verschlusses tragen, der mit einer Seite des jeweiligen Streifens verbunden ist, und einander mit den Membranen gegenüber liegen, wenn sie miteinander mittels einer Anziehungskraft in Kontakt gebracht werden, die von den magnetischen Elementen (18, 28) erzeugt wird, sodass ein Abdichten des abdichtenden Verschlusses (100) bereitgestellt wird und, wenn durch den abdichtenden Verschlusses (100) ein Abdichten bereitgestellt wird, die abdichtbare Vorrichtung (120) abgedichtet wird;
wobei die Streifen (10, 20) jeweils eine Dicke derselben aufweisen;
wobei in denselben jeweils mehrere Hohlräume (16, 26) innerhalb der Dicke aufweisen;
für jeden der Streifen die Hohlräume (16, 26) derselben die magnetischen Elemente (18, 28) derselben innerhalb der Dicke derselben zwischen dem Streifen und der jeweiligen Membran, die darauf getragen wird, eingeschlossen und eingebettet sind;
wobei die abdichtbare Vorrichtung (120) einen ersten Abschnitt und einen zweiten Abschnitt umfasst, die sich an einer Öffnung der abdichtbaren Vorrichtung (120) befinden, wobei eine erste der Membranen (19, 29) der erste Abschnitt ist und eine zweite der Membranen (19, 29) der zweite Abschnitt ist, wobei der erste Abschnitt mit einem ersten der Streifen über ein erstes Verbindungsmittel verbunden ist, das aus der Gruppe des HF-Schweißens, Ultraschallschweißens, Hitzeschweißens oder Klebens ausgewählt ist, und wobei der zweite Abschnitt mit einem zweiten der Streifen (10, 20) über ein zweites Verbindungsmittel verbunden ist, das aus der Gruppe des HF-Schweißens, Ultraschallschweißens, Hitzeschweißens oder Klebens ausgewählt ist.

2. Abdichtbare Vorrichtung (120) nach Anspruch 1, wobei jede der Membranen (19, 29) **gekennzeichnet ist durch**: (i) eine vorgegebene Dicke, die im Wesentlichen die magnetischen Anziehungsfähigkeiten der mehreren magnetischen Elemente (18, 28) der Streifen (10, 20) beibehält; und (ii) einen vorgegebenen Haftreibungskoeffizienten, der im Wesentlichen die Bewegung der Membranen (19, 29) zueinander verhindert; wobei, soweit vorgesehen, die Abdichtung aufgrund der vorgegebenen Dicke und der vorgegebenen Haftreibungskoeffizienten der Membranen (19, 29) gegenüber mechanischen Verformungen des abdichtenden Verschlusses (100) bezüglich der Hauptachse (X) der Streifen (10, 20) stabil ist.

3. Abdichtbare Vorrichtung (120) nach Anspruch 1, wobei die Membranen (19, 29) und die Streifen (10, 20) aus polymeren Materialien gefertigt sind, die ausgewählt sind aus einer Gruppe bestehend aus:
Elastomer, Kautschuk, TPR, TPE, TPU, HPU, Neopran, Polyacrylaten, Polyamiden, Polyestern, Polycarbonaten, Polyimiden, Polystyrolen, Acrylonitril-Butadien-Styrol (ABS), Polyacrylonitril (PAN) oder Acryl, Polybutadien, Poly(butylenterephthalat) (PBT), Poly(ethersulfon) (PES, PES/PEES), Poly(etheretherketon)(en) (PEEK, PES/PEEK), Polyethylen (PE), Poly(ethylenglycol) (PEG), Poly(ethylenterephthalat) (PET), Polypropylen (PP), Polytetrafluorethylen (PTFE), Styrol-Acrylnitril-Harz (SAN), Poly(trimethylenterephthalat) PTT), Polyurethan (PU), Polyvinylbutyral (PVB), Polyvinylchlorid (PVC), Polyvinylidendifluorid (PVDF), Poly(vinylpyrrolidon) (PVP), oder jeder beliebigen Kombination davon.

4. Abdichtbare Vorrichtung (120) nach Anspruch 1, wobei der abdichtende Verschluss flexibel und wasserundurchlässig ist.

5. Abdichtbare Vorrichtung (120) nach Anspruch 1, wobei die mehreren Hohlräumen (16, 26) der Streifen (10, 20) ausgewählt sind aus der Gruppe bestehend aus: Nischen, Aussparungen, Mulden, Öffnungen, Löchern, vollen Öffnungen, Durchlässen oder einer beliebigen Kombination davon.

## Revendications

1. Dispositif scellable (120) comprenant une fermeture par scellement magnétique (100), comprenant :
deux bandes flexibles (10, 20) ; chaque bande (10, 20) ayant un axe principal (X) et comprenant une pluralité d'éléments magnétiques (18, 28) de la fermeture ; lesdites bandes (10, 20) portant chacune une membrane (19, 29) de la fermeture reliée à un côté de la bande respective et se faisant mutuellement face avec les membranes une fois amenées en contact entre elles au moyen d'une force d'attraction générée par lesdits éléments magnétiques (18, 28), de telle sorte qu'un scellement de la fermeture par scellement (100) est fourni et, une fois un scellement est fourni par la fermeture par scellement (100) le dispositif scellable (120) est scellé ;
lesdites bandes (10, 20) ayant chacune leur épaisseur ;
dans lequel lesdites bandes (10, 20) ont chacune une pluralité de cavités (16, 26) dans celles-ci dans ladite épaisseur ; et
pour chacune desdites bandes, leurs cavités (16, 26) encapsulent et intègrent leurs éléments magnétiques (18, 28) dans leur épaisseur, entre la bande et la membrane respective portée sur celle-ci ;
dans lequel le dispositif scellable (120) comprend une première partie et une deuxième partie située à une ouverture du dispositif scellable (120), dans lequel une première des membranes (19, 29) est la première partie et une deuxième des membranes (19, 29) est la deuxième partie, la première partie étant reliée à une première des bandes par un premier moyen de connexion choisi dans le groupe des soudures par radiofréquence, par ultrasons, par chaleur ou par collage, et la deuxième partie est reliée à une deuxième des bandes (10, 20) par un deuxième moyen de connexion choisi dans le groupe des soudures par radiofréquence, par ultrasons, par chaleur ou par collage.

2. Dispositif scellable (120) selon la revendication 1, dans lequel chacune desdites membranes (19, 29) est **caractérisée par** : (i) une épaisseur prédéterminée qui préserve de façon substantielle les capacités d'attraction magnétique de ladite pluralité d'éléments magnétiques (18, 28) desdites bandes (10, 20) ; et (ii) un coefficient de frottement statique prédéterminé qui empêche de façon substantielle un mouvement desdites membranes (19, 29) l'une par rapport à l'autre ; une fois fourni, ledit scellement étant stable vis-à-vis de déformations mécaniques de ladite fermeture par scellement (100) par rapport audit axe principal (X) desdites bandes (10, 20) en raison de ladite épaisseur prédéterminée et desdits coefficients de frottement statique prédéterminés desdites membranes (19, 29).

3. Dispositif scellable (120) selon la revendication 1, dans lequel lesdites membranes (19, 29) et lesdites bandes (10, 20) sont faites de matières polymères choisies parmi un groupe consistant en : élastomère, caoutchouc, TPR, TPE, TPU, HPU, Néoprène, Polyacrylates, Polyamides, Polyesters, Polycarbonates, Polyimides, Polystyrènes, acrylonitrile butadiène styrène (ABS), polyacrylonitrile (PAN) ou Acrylique, polybutadiène, poly(téréphtalate de butylène) (PBT), poly(éther sulfone) (PES, PES/PEES), poly(éther éther cétones) (PEEK, PES/PEEK), polyéthylène (PE), poly(éthylène glycol) (PEG), poly(téréphtalate d'éthylène) (PET), polypropylène (PP), polytétrafluoroéthylène (PTFE), résine de styrène/acrylonitrile (SAN), poly(téréphtalate de triméthylène) (PTT), polyuréthane (PU), polyvinyl butyral (PVB), poly(chlorure de vinyle) (PVC), poly(difluorure de vinylidène) (PVDF), poly(vinyl pyrrolidone) (PVP) ou toute combinaison de ceux-ci.

4. Dispositif scellable (120) selon la revendication 1, dans lequel ladite fermeture par scellement est flexible et imperméable à l'eau.

5. Dispositif scellable (120) selon la revendication 1, dans lequel ladite pluralité de cavités (16, 26) desdites bandes (10, 20) sont choisies parmi le groupe consistant en : niches, renfoncements, puits, ouvertures, trous, pleines ouvertures, orifices ou toute combinaison de ceux-ci.
